# EUROPEAN PATENT APPLICATION

(11) **EP 4 497 651 A1**
(43) Date of publication of application: **29.01.2025**
(21) Application number: 23306275.1
(22) Date of filing: 24.07.2023
(51) Int. Cl.: B61D 33/00, B60N 2/24, B60N 2/00

(54) **CANTILEVER SEAT STRUCTURE**

(71) Applicant: ALSTOM Holdings, 93400 Saint-Ouen-sur-Seine (FR)
(72) Inventor: LUERS, Rolf, 38304 WOLFENBÜTTEL (DE)
(74) Representative: Lavoix

(57) **Abstract**

The invention concerns a cantilever seat structure intended to be fixed on a wall structure (12), in particular in a public transport vehicle, comprising a support frame (18) having first fixation means (20) intended to be fixed on the wall structure (12), characterized in that the cantilever seat structure (10) comprises at least one reinforcement rod (24) extending inclined from a connection end connected to the support frame (18) and a fixation end comprising second fixation means (26) intended to be fixed on the wall structure (12), the second fixation means (26) being upper than the first fixation means (20) in a vertical direction (Z).

## Description

The present invention relates to a cantilever seat structure, in particular for a public transport vehicle, for instance a railway vehicle.

Several categories of seat structures are already known from prior art for a railway vehicle.

A first category consists in seats structures with a support mounted on the floor. In this case, the forces applied to the seat are flowing through the support to the floor.

A second category consists in seats with no additional structure. In this case, the seat itself is mounted to a sidewall. The forces applied to the seat are flowing directly to the sidewall.

A third category consists in classic cantilever seats, wherein the seat is mounted on a cantilever support frame mounted on the sidewall. The forces applied to the seat are flowing through the cantilever support frame to the sidewall.

The invention relates to said third category.

Usually, the cantilever support frame comprises a support leg extending under the seat, resting on the sidewall in order to transfer a part of the forces applied to the seat toward the sidewall.

However, it appears that such a support leg may be in the way of cleaning robots, which may not have a total access under the seat. It is considered that a 300 mm free space under the seat is preferable for an optimized cleaning below the seats.

The invention is intended to solve this problem by proposing a cantilever seat structure that enables a sufficient free space below the seat.

To this end, the invention relates to a cantilever seat structure intended to be fixed on a wall structure, in particular in a public transport vehicle, comprising a support frame having first fixation means intended to be fixed on the wall structure, characterized in that the cantilever seat structure comprises at least one reinforcement rod extending inclined from a connection end connected to the support frame and a fixation end comprising second fixation means intended to be fixed on the wall structure, the second fixation means being upper than the first fixation means in a vertical direction.

The invention uses a reinforcement rod connected to the wall above the support frame instead of a leg under the support frame. Thus, the space under the seat is free of support leg, allowing a free access for cleaning robots or forming a luggage space.

A cantilever seat structure according to the invention may comprise any of the following features, taken alone or in any possible combination.
- The support frame is formed from an assembly of at least one tube, preferentially of substantially circular cross section.
- The reinforcement rod has a cross section with a dimension in a first horizontal direction inferior to a dimension in a second direction perpendicular to the first direction and having a vertical component.
- The reinforcement rod is made of steel.
- The cantilever seat structure comprises at least a seat supported by the support frame, the seat having a headrest, wherein the reinforcement rod is arranged under the headrest in a vertical direction.
- The reinforcement rod is welded to the support frame.

The invention also relates to a public transport vehicle comprising a wall structure, characterized in that it comprises a cantilever seat structure as defined above, fixed on the wall structure.

Preferentially, the wall structure comprises a first lower fixation rail intended to receive the first fixation means and a second upper fixation rail intended to receive the second fixation means.

Several aspects and advantages of the invention will be shown in the following disclosure, only given as a non limitative example and made in reference to enclosed Figures:
- Figure 1 is a side view of a cantilever seat structure according to an example of embodiment of the invention,

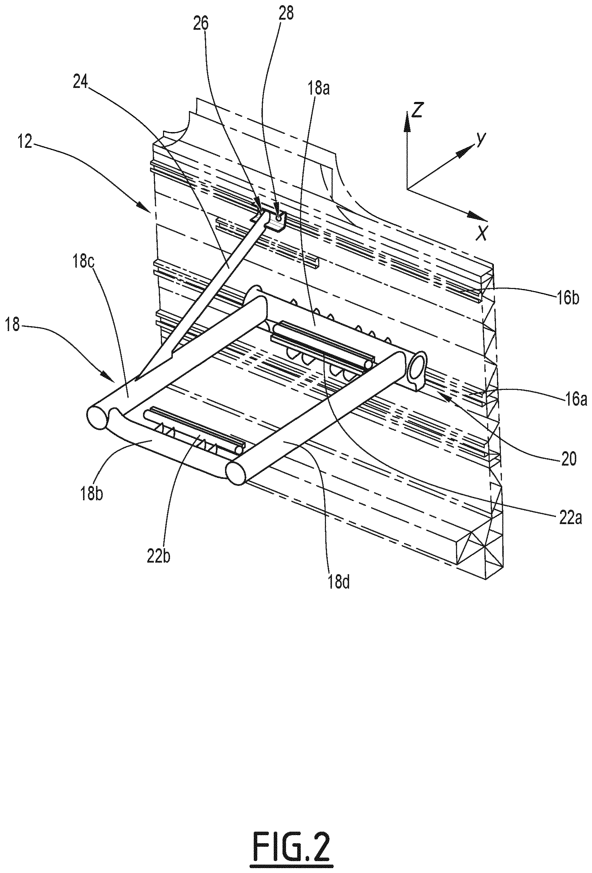

- Figure 2 is a perspective view of a support frame of the cantilever seat structure of Figure 1.

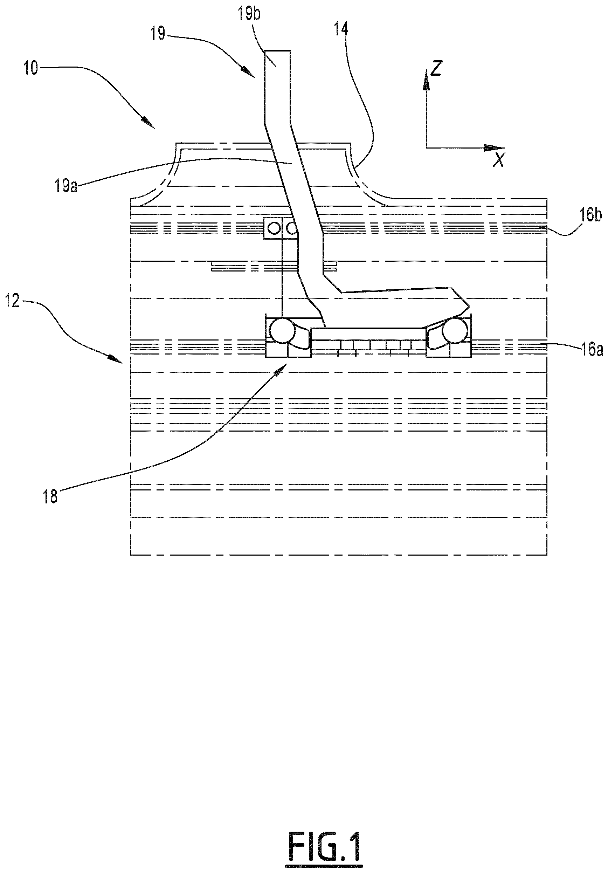

Figure 1 shows a cantilever seat structure 10 according to an example of embodiment of the invention. The cantilever seat structure 10 is intended to be fixed on a wall structure 12.

The wall structure 12 is for instance a side wall of a public transport vehicle. Preferentially, the public transport vehicle is a railway vehicle, in particular a regional train or a tramway.

The wall structure 12 preferably comprises windows openings 14.

Preferentially, the wall structure 12 embeds fixation rails 16a, 16b for the fixation of diverse equipment. Figures show a first lower fixation rail 16a and a second upper fixation rail 16b, the upper fixation rail 16b being arranged above the lower fixation rail 16a in a vertical direction Z. Each rail 16a, 16b extends in a longitudinal direction X perpendicular to the vertical direction Z. Thus, the wall structure 12 extends in a plane parallel to the longitudinal direction X and to the vertical direction Z.

The cantilever seat structure 10 comprises a support frame 18 having first fixation means 20 intended to be fixed on the wall structure 12, more particularly to be fixed on the lower rail 16a. The cantilever seat structure 10 also comprises a seat 19 held by the support frame 18. The seat 19 comprises a backrest 19a and a headrest 19b.

The lower rail 16a is preferentially arranged at more than or equal to 300 mm from the floor, in order to keep a free space of at least 300 mm below the seat. Preferentially, the lower rail 16a is arranged as low as possible, for instance à a height of 300 mm from the floor.

Besides, the upper rail 16b is preferentially arranged as high as possible, for instance just under the window openings 14, preferentially at a height of 620 mm from the floor.

The support frame 18 is formed from an assembly of at least one tube, preferentially of substantially circular cross section. For instance, the support frame 18 comprises a wall side tube 18a, a free side tube 18b, a rear tube 18c and a front tube 18d, connected together in a rectangle to form the frame 18.

In the disclosure, the wordings "rear" and "front" are considered relative to the seat direction. Thus, the backrest 19a is rearwards.

The wall side tube 18a extends in the longitudinal direction X, and parallel to the lower fixation rail 16a. This wall side tube 18a is fixed to the lower fixation rail 16a by means of the first fixation means 20. For instance, the first fixation means 20 comprise screws screwed in the lower rail 16a, in particular four screws. The wall side tube 18a also comprises a first fixation element 22a for fixing the seat 19. The first fixation element 22a is classical, for example made of aluminum.

In a variant, the first fixation element 22a can be omitted by including the fixation interface for seat 19 into the wall side tube 18a.

The free side tube 18b extends substantially parallel to the wall side tube 18a, being held by the rear tube 18c and the front tube 18d. The free side tube 18b comprises a second fixation element 22b for fixing the seat 19. The second fixation element 22b is classical, for example made of aluminum.

In a variant, the second fixation element 22b can be omitted by including the fixation interface for seat 19 into the free side tube 18b.

The rear tube 18c and the front tube 18d extend substantially parallel to each other, in a transversal direction Y perpendicular to the vertical direction Z and perpendicular to the longitudinal direction X. Thus, the rear tube 18c and the front tube 18d extend perpendicular to the wall 12. The rear tube 18c and the front tube 18d extend are connected to the wall side tube 18a at one end, and connected to the free side tube 18b at the other end.

The cantilever seat structure 10 comprises at least one reinforcement rod 24 extending inclined from a connection end connected to the support frame 18 and a fixation end comprising second fixation means 26 intended to be fixed on the wall structure 12. The second fixation means 26 are upper than the first fixation means 20 in the vertical direction.

For instance, the second fixation means 26 comprises a fixation plate 28 screwed to the upper rail 16b, for instance with two screws.

Preferentially, the reinforcement rod 24 is connected to the rear tube 18c. For instance, the reinforcement rod is welded to the support frame 18, more particularly welded to the rear tube 18c. Thus, the reinforcement rod 24 is intended to be arranged behind a backrest 19a of the seat 19.

Preferentially, the reinforcement rod 24 is flat. In other words, the reinforcement rod 24 has a cross section with a dimension in a first horizontal direction (parallel to the longitudinal direction X) inferior to a dimension in a second direction perpendicular to the first direction and having a vertical component. The rear tube 18c is arranged in the second direction relative to the reinforcement rod 24.

Preferentially, the reinforcement rod 24 is made of steel.

Since the reinforcement rod 24 is upper than the frame 18, it is intended to take tensile forces instead or pressure forces as a leg in a classical cantilever seat.

The frame 18 is intended to take forces in longitudinal X and transversal Y directions, and the rod 24 is intended to manage the forces in the vertical direction Z.

Preferentially, the reinforcement rod 24 and the rear tube 18c are arranged under a part of the backrest 19a (and under the headrest 19b) in the vertical direction Z, as shown on figure 1. Therefore, the frame 18 does not exceed the seat 19, more particularly does not exceed the headrest 19b rearwards in the longitudinal direction X.

Preferentially, the frame 18 also does not exceed the seat 19 frontwards in the longitudinal direction X.

## Claims

1. A cantilever seat structure (10) intended to be fixed on a wall structure (12), in particular in a public transport vehicle, comprising a support frame (18) having first fixation means (20) intended to be fixed on the wall structure (12), **characterized in that** the cantilever seat structure (10) comprises at least one reinforcement rod (24) extending inclined from a connection end connected to the support frame (18) and a fixation end comprising second fixation means (26) intended to be fixed on the wall structure (12), the second fixation means (26) being upper than the first fixation means (20) in a vertical direction (Z).

2. The cantilever seat structure (10) according to claim 1, wherein the support frame (18) is formed from an assembly of at least one tube (18a, 18b, 18c, 18d), preferentially of substantially circular cross section.

3. The cantilever seat structure (10) according to any of preceding claims, wherein the reinforcement rod (24) has a cross section with a dimension in a first horizontal direction inferior to a dimension in a second direction perpendicular to the first direction and having a vertical component.

4. The cantilever seat structure (10) according to any of preceding claims, wherein the reinforcement rod (24) is made of steel.

5. The cantilever seat structure (10) according to any of the preceding claims, comprising at least a seat (19) supported by the support frame (18), the seat (19) having a headrest (19b), wherein the reinforcement rod (24) is arranged under the headrest (19b) in a vertical direction (Z).

6. The cantilever seat structure (10) according to any of the preceding claims, wherein the reinforcement rod (24) is welded to the support frame (18).

7. A public transport vehicle comprising a wall structure (12), **characterized in that** it comprises a cantilever seat structure (10) according to any of the preceding claims, fixed on the wall structure (12).

8. The public transport vehicle of claim 7, wherein the wall structure (12) comprises a first lower fixation rail (16a) intended to receive the first fixation means (20) and a second upper fixation rail (16b) intended to receive the second fixation means (26).
